# EUROPEAN PATENT APPLICATION

(11) **EP 3 148 120 A1**
(43) Date of publication of application: **29.03.2017**
(21) Application number: 15893169.1
(22) Date of filing: 25.12.2015
(51) Int. Cl.: H04L 12/26, G06F 11/36

(54) **SERVICE SYSTEM TEST METHOD AND DEVICE**

(30) Priority: 10.11.2015 CN 201510763247
(71) Applicant: China Construction Bank Corporation, Beijing 100033 (CN)
(72) Inventor: DING, Shanshan, Beijing 100033 (CN); CUI, Yuxin, Beijing 100033 (CN); GUAN, Lei, Beijing 100033 (CN); ZHOU, Xin, Beijing 100033 (CN)
(74) Representative: Boult Wade Tennant
(86) International application number: PCT/CN2015/098825
(87) International publication number: WO 2016/188101

(57) **Abstract**

The present disclosure provides a test method and device for a business system. The method includes: acquiring a preset page address; sending a first control instruction carrying the page address to the business system such that the business system displays a first page corresponding to the page address based on the first control instruction; acquiring a business to be tested in a prestored list of business to be tested; generating a second control instruction based on the business to be tested and sending it to the business system such that the business system starts executing the business to be tested on the first page based on the second control instruction; and acquiring a test result of the business system executing the business to be tested. The present disclosure may simulate the process of the user really using the business system to process the business to be tested and acquire the test result, thereby achieving the purpose of testing the business system at the level of business logic.

## Description

### FIELD

The present disclosure relates to the technical field of a communication network, more particularly to a test method and device for a business system.

### BACKGROUND

With a rapid development of Internet technologies, more and more business tractions are realized by the business system, accompanied by increasingly abundant functions of the business system. In order to ensure a normal operation of the business system, it needs to test the performance of the business system.

During testing the business system, the existing test method is to send an http request to a page of the business system so as to receive a message returned by the page of the business system responding to the http request, and to determine the performance of the business system by interpreting whether a return code in the message is an expected return code and whether the time of returning the message is within an expected threshold range. Obviously, the existing test method just stays at the http level.

While in practical applications, the performance of the business system mainly depends on the ability of the business system practically processing business. Therefore, the technical problem urgent to be solved by persons skilled in the art is how to test the business system at the level of business logic.

### SUMMARY

In view of this, the present disclosure provides a test method and device for a business system, in order to test the business system at the level of business logic.

In order to realize the above purpose, the present disclosure provides the following technical solutions.

A test method for a business system includes:
acquiring a preset page address;
sending a first control instruction carrying the page address to the business system such that the business system displays a first page corresponding to the page address based on the first control instruction;
acquiring a business to be tested in a prestored list of business to be tested;
generating a second control instruction based on the business to be tested and sending it to the business system such that the business system starts executing the business to be tested on the first page based on the second control instruction; and
acquiring a test result of the business system executing the business to be tested.

Optionally, after generating the second control instruction based on the business to be tested and sending it to the business system, the method further includes:
monitoring a process of the business system executing the business to be tested;
acquiring test data corresponding to the business to be tested from a prestored profile when it is determined that the business system currently needs to use the test data;
determining an indication position corresponding to the test data; and
sending a third control instruction carrying the test data and the indication position to the business system such that the business system fills the test data at the indication position and makes a response.

Optionally, after acquiring the test result of the business system executing the business to be tested, the method further includes:
writing the test result into a log file; and
saving the log file to a preset storage position.

Optionally, when the list of business to be tested includes at least two businesses to be tested, after generating the second control instruction based on the business to be tested and sending it to the business system such that the business system starts executing the business to be tested on the first page based on the second control instruction, the method further includes:
acquiring another business to be tested adjacent to the business to be tested executed by the business system in the list of business to be tested; and
controlling the business system to continuously execute the unexecuted another business to be tested on the page displayed after the execution to the business to be tested based on the second control instruction is completed, until the business system completes the execution to all the business to be tested in the list of business to be tested.

Optionally, the method further includes:
monitoring a current time;
determining a first time at this moment, after it is determined that the business system completes the execution to all the businesses to be tested in the list of business to be tested; and
returning to the step of acquiring the preset page address, when the current time reaches a second time separated with the first time by a preset time length.

Optionally, the acquiring the test result of the business system executing the business to be tested is specifically to:
receive an execution result returned by the business system executing the business to be tested; and/or
monitor the page where the business system is executing the business to be tested, and generate the test result.

A test device for a business system includes:
an address acquiring unit for acquiring a preset page address;
a first sending unit for sending a first control instruction carrying the page address to the business system such that the business system displays a first page corresponding to the page address based on the first control instruction;
a first acquiring unit for acquiring a business to be tested in a prestored list of business to be tested;
a second sending unit for generating a second control instruction based on the business to be tested and sending it to the business system such that the business system starts executing the business to be tested on the first page based on the second control instruction; and
a result acquiring unit for acquiring a test result of the business system executing the business to be tested.

Optionally, the device further includes:
a business monitoring unit for monitoring a process of the business system executing the business to be tested after the second sending unit generates the second control instruction based on the business to be tested and sends it to the business system;
a data acquiring unit for acquiring test data corresponding to the business to be tested from a prestored profile when it is determined that the business system currently needs to use the test data;
a position determining unit for determining an indication position corresponding to the test data; and
a third sending unit for sending a third control instruction carrying the test data and the indication position to the business system such that the business system fills the test data at the indication position and makes a response.

Optionally, the device further includes:
a first writing unit for writing the test result into the log file; and
a first saving unit for saving the log file to a preset storage position.

Optionally, the device further includes:
a second acquiring unit for acquiring another business to be tested adjacent to the business to be tested executed by the business system in the list of business to be tested; and
a first control unit for controlling the business system to continuously execute the unexecuted another business to be tested on the page after the execution to the business to be tested based on the second control instruction is completed, until the business system completes the execution to all the businesses to be tested in the list of business to be tested.

Optionally, the device further includes:
a time monitoring unit for monitoring a current time;
a time determining unit for determining a first time at this moment, after it is determined that the business system completes the execution to all the businesses to be tested in the list of business to be tested; and
a first triggering unit for triggering the address acquiring unit to acquire the preset page address when the current time reaches a second time separated with the first time by a preset time length.

Optionally, the result acquiring unit is specifically used to receive an execution result returned by the business system executing the business to be tested; and/or specifically monitor the page where the business system is executing the business to be tested, and generate the test result.

It may be known from the above technical solutions that, as compared to the prior art, the embodiments of the present disclosure disclose the test method for the business system in which the first control instruction carrying the page address is sent to the business system such that the business system displays the first page corresponding to the page address based on the first control instruction; and then the business to be tested is acquired from the prestored list of business to be tested and the second control instruction is generated such that the business system starts executing the business to be tested on the first page based on the second control instruction, and finally the test result of the business system executing the business to be tested may be acquired. As such, the present disclosure may simulate the process of the user really using the business system to process the business to be tested and acquire the test result, thereby achieving the purpose of testing the business system at the level of business logic.

### BRIEF DESCRIPTION OF THE DRAWINGS

In order to more clearly explain the embodiments of the present disclosure or the technical solutions of the prior art, the drawings to be used in the descriptions of the embodiments or the prior art are briefly introduced as follows. Obviously, the drawings in the following description are only embodiments of the present disclosure, and the person skilled in the art may further obtain other drawings from these drawings without contributing any creative work.
Fig. 1 is a schematic flow chart of the test method for the business system disclosed in the first embodiment of the present disclosure;
Fig. 2 is a schematic flow chart of the test method for the business system disclosed in the second embodiment of the present disclosure;
Fig. 3 is a schematic diagram of one implementation of the business system displaying the first page disclosed in the second embodiment of the present disclosure;
Fig. 4 is a schematic flow chart of the test method for the business system disclosed in the third embodiment of the present disclosure;
Fig. 5 is a schematic flow chart of the test method for the business system disclosed in the fourth embodiment of the present disclosure;
Fig. 6 is a schematic flow chart of the test method for the business system disclosed in the fifth embodiment of the present disclosure;
Fig. 7 is a structural schematic diagram of the test device for the business system disclosed in the sixth embodiment of the present disclosure;
Fig. 8 is a structural schematic diagram of the test device for the business system disclosed in the seventh embodiment of the present disclosure;
Fig. 9 is a structural schematic diagram of the test device for the business system disclosed in the eighth embodiment of the present disclosure;
Fig. 10 is a structural schematic diagram of the test device for the business system disclosed in the ninth embodiment of the present disclosure; and
Fig. 11 is a structural schematic diagram of the test device for the business system disclosed in the tenth embodiment of the present disclosure.

### DETAILED DESCRIPTION OF THE EMBODIMENTS

The technical solutions in the embodiments of the present disclosure will be clearly and completely described with reference to the drawings in the embodiments of the present disclosure. Obviously, the described embodiments are just parts of the embodiments of the present disclosure rather than all the embodiments. Based on the embodiments of the present disclosure, all the other embodiments obtained by the person skilled in the art without contributing any creative work fall within the protection scope of the present disclosure.

The first embodiment of the present disclosure discloses the test method for the business system, applied to the test system which may communicate with the business system on the network.

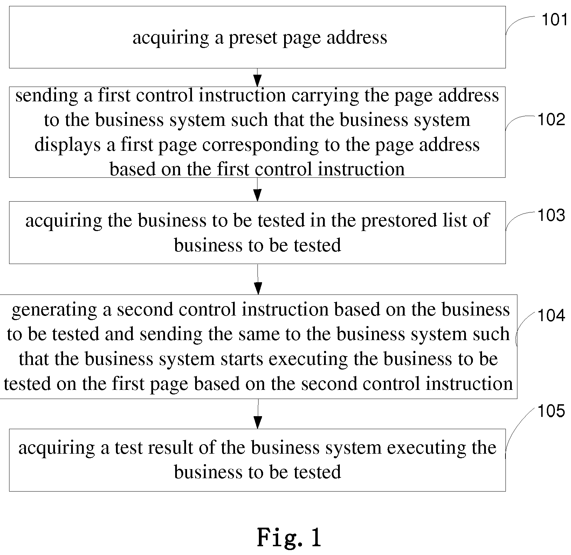

As shown in Fig.1, the method includes the following processes.

Step 101: acquiring a preset page address.

The page address is an address of a page used by the business system executing a business to be tested in a list of business to be tested.

Specifically, the page address is a URL address.

Step 102: sending a first control instruction carrying the page address to the business system such that the business system displays a first page corresponding to the page address based on the first control instruction.

Specifically, when the business system accesses the page address, the business system may jump to the first page corresponding to the page address, wherein the first page is a page used by the business system executing the business to be tested in the list of business to be tested.

Step 103: acquiring the business to be tested in the prestored list of business to be tested.

At least one business for simulating the process that the user uses the business system is stored in the list of business to be tested. Specifically, the type and the number of the businesses stored in the list of business to be tested may be set as needed, and are not limited in the present disclosure.

It needs to explain that when the business system starts to be tested, the business to be tested may be acquired in sequence according to the order of the businesses to be tested stored in the list of business to be tested. The first acquired business to be tested is the first business to be tested in the prestored list of business to be tested. Correspondingly, the preset page address mentioned above is an address corresponding to the first business to be tested in the list of business to be tested.

The present disclosure does not limit the execution order of the steps 101, 102 and 103, and it is also possible to execute the step 103, and then to execute the steps 101 and 102.

Step 104: generating a second control instruction based on the business to be tested and sending the same to the business system such that the business system starts executing the business to be tested on the first page based on the second control instruction.

The process of controlling the business system to start executing the business to be tested on the first page is the process of simulating the user really operating the business system to process business.

Step 105: acquiring a test result of the business system executing the business to be tested.

During the business system executes the business to be tested, the test result of the business system executing the business to be tested may be acquired. This test result may represent the processing ability of the business system really processing the business to be tested.

In the present disclosure, the acquiring the test result of the business system executing the business to be tested may be specifically to:
receive an execution result returned by the business system executing the business to be tested;
and/or monitor the page where the business system is executing the business to be tested, and generate a test result.

Specifically, when the business system executes the business to be tested, it may send the execution result of executing the business to be tested to the test system which takes the execution result as the test result. Of course, the monitoring system may monitor the page on which the business system is executing the business to be tested, and generate the test result by analyzing the information fed back from the page.

As such, in the present embodiment, the purpose of testing the business system at the level of business logic may be achieved by simulating the process of the user really using the business system to process the business to be tested and acquiring the test result.

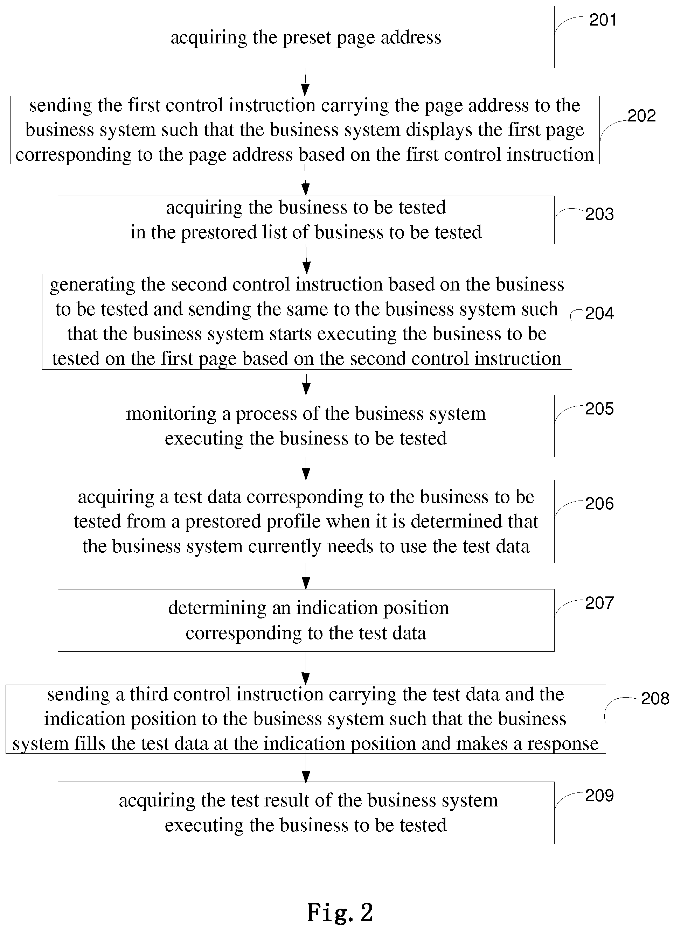

When the user practically uses the business system to process the business, there is a scene of requiring the user to add user data. For example, under the user login scene, the user is required to enter a username and a password, etc. Then, when the business scene of the business system requires the user to fill in the user data is simulated, in order to ensure the reliability of the test result, it also needs to simulate the user filling in the relevant data. Specifically, the second embodiment of the present disclosure discloses the test method for the business system as shown in Fig. 2, which includes the following processes.

Step 201: acquiring the preset page address.

Step 202: sending the first control instruction carrying the page address to the business system such that the business system displays the first page corresponding to the page address based on the first control instruction.

Step 203: acquiring the business to be tested in the prestored list of business to be tested.

Step 204: generating the second control instruction based on the business to be tested and sending the same to the business system such that the business system starts executing the business to be tested on the first page based on the second control instruction.

Step 205: monitoring a process of the business system executing the business to be tested.

Step 206: acquiring the test data corresponding to the business to be tested from a prestored profile when it is determined that the business system currently needs to use the test data.

The test data used by the business system executing the business to be tested is stored in the profile, and may be set and stored by the user in advance.

Step 207: determining an indication position corresponding to the test data.

During the user practically using the business system to process the business, the relevant data is filled in manually by the user at the corresponding position of the current display page of the business system. While in the present disclosure, in order to ensure that the test data is accurately filled in the correct position of the current display page of the business system, it needs to determine the indication position corresponding to the test data.

The indication position corresponding to each test data may be set by the user in advance.

Step 208: sending a third control instruction carrying the test data and the indication position to the business system such that the business system fills the test data at the indication position and makes a response.

Step 209: acquiring the test result of the business system executing the business to be tested.

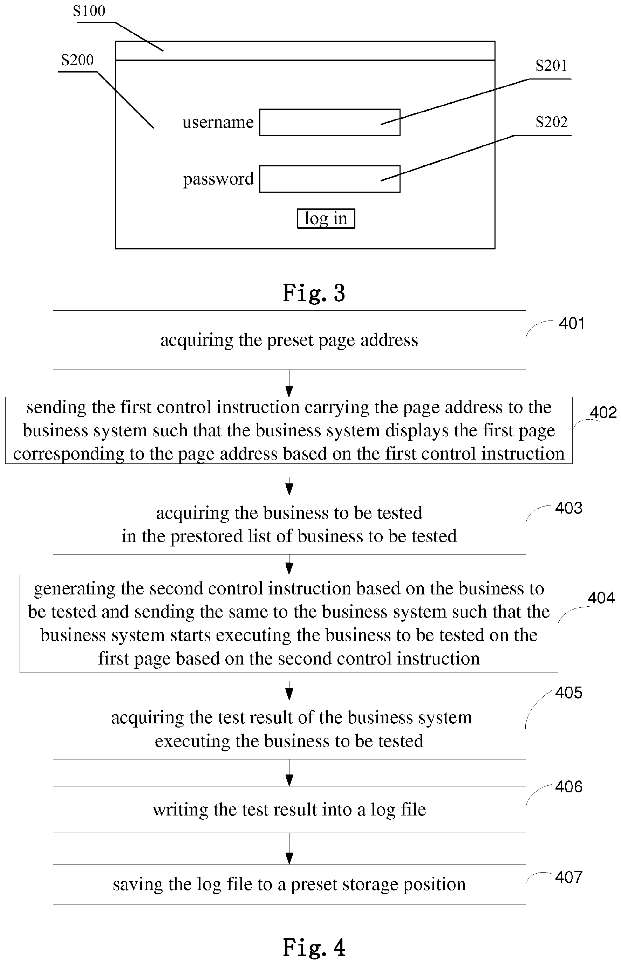

For convenient understanding, taking a specific embodiment as an example, it is assumed that the monitoring system simulates the scene of the user logs in the business system. As shown in Fig. 3, it needs to firstly control the business system to display the first page S200 corresponding to the page address S100, wherein the first page S200 is the page on which the user is required to enter the username and the password. When the monitoring system monitors that the first page of the business system requires the user to fill in the username and the password, the username data and the password data are acquired from the prestored profile, and the indication position where the username data shall be filled in and the indication position where the password data shall be filled in are determined, and then the business system is controlled to fill in the username data at the indication position S201, fill in the password data at the indication position S202, and trigger a login button of the business system, such that the business system goes to another page after the user logs in from the first page.

In the present disclosure, after the test result is acquired, it is possible to analyze the performance of the business system according to the test result on the spot. Of course, it may firstly save the test result for subsequently analyzing the performance of the business system based on the test result. Based on this, the third embodiment of the present disclosure discloses the test method based on the business system as shown in Fig. 4, which includes the following processes.

Step 401: acquiring the preset page address.

Step 402: sending the first control instruction carrying the page address to the business system such that the business system displays the first page corresponding to the page address based on the first control instruction.

Step 403: acquiring the business to be tested in the prestored list of business to be tested.

Step 404: generating the second control instruction based on the business to be tested and sending the same to the business system such that the business system starts executing the business to be tested on the first page based on the second control instruction.

Step 405: acquiring the test result of the business system executing the business to be tested.

Step 406: writing the test result into a log file.

Step 407: saving the log file to a preset storage position.

The position where the log file is stored may be set in advance. Specifically, the user may store a path indication information for indicating the storage position in the profile in advance. When the monitoring system writes the test result into the log file, the storage position may be determined according to the path indication information in the profile, thereby saving the log file into the storage position.

When the business system is subsequently analyzed based on the test result, the performance of the business system may be determined based on the information such as success rate of the test result, response time, etc.

As such, in the present embodiment, the purpose of testing the business system at the level of business logic is achieved by simulating the process of the user really using the business system to process the business to be tested and acquiring the test result.

It needs to explain that when the list of business to be tested includes at least two businesses to be tested, as a manner, it is possible for each business to be tested to preset a page address corresponding to it, thereby controlling the business system to execute the corresponding business to be tested in sequence on the displayed page corresponding to different page addresses. In other words, the process of testing each business to be tested in the list of business to be tested is consistent with the above test method, until all the businesses to be tested in the list to be tested are tested, and this round of test is completed.

For example, the list of business to be tested includes the business A to be tested and the business B to be tested. When the test starts, the page address A1 corresponding to the business A to be tested is acquired firstly, to control the business system to start executing the business A to be tested on the displayed page corresponding to the page address A1, thereby acquiring the test result. Then, the page address B1 corresponding to the business B to be tested is then acquired, to control the business system to start executing the business B to be tested on the displayed page corresponding to the page address B1, thereby acquiring the test result.

In this case, in order to ensure the correspondence of the page address to the business to be tested, it is possible to establish the one-to-one relation between the page address and the business to be tested in advance. During one business to be tested is tested, it is sufficient to ensure the acquired page address to correspond to the business to be tested.

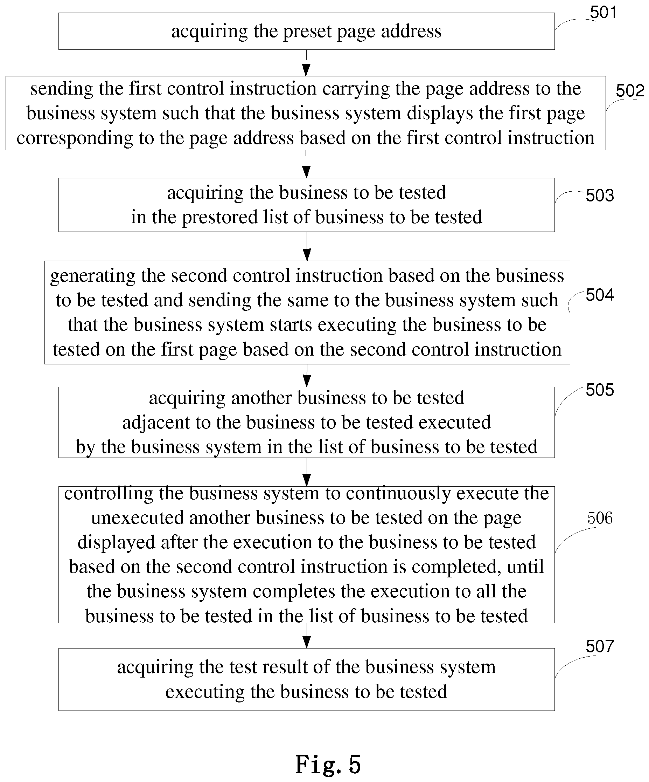

When the list of business to be tested includes at least two businesses to be tested, as another manner, it is possible only for the first business to be tested in the list of business to be tested to preset the page address corresponding to it, while other business to be tested in the list of business to be tested may be continuously executed on the page displayed after the business system completes the execution to the previous business to be tested. For this case, the fourth embodiment of the present disclosure discloses the test method for the business system as shown in Fig. 5, which includes the following processes:
step 501: acquiring the preset page address;
step 502: sending the first control instruction carrying the page address to the business system such that the business system displays the first page corresponding to the page address based on the first control instruction;
step 503: acquiring the business to be tested in the prestored list of business to be tested;
step 504: generating the second control instruction based on the business to be tested and sending the same to the business system such that the business system starts executing the business to be tested on the first page based on the second control instruction;
step 505: acquiring another business to be tested adjacent to the business to be tested executed by the business system in the list of business to be tested;
step 506: controlling the business system to continuously execute the unexecuted another business to be tested on the page displayed after the execution to the business to be tested based on the second control instruction is completed, until the business system executes all the businesses to be tested in the list of business to be tested; and
step 507: acquiring the test result of the business system executing the business to be tested,
wherein, specifically, the test result of the business system executing each business to be tested may be acquired.

For example, the list of business to be tested includes the business A to be tested and the business B to be tested. When the test starts, the page address A1 is acquired firstly, to control the business system to start executing the business A to be tested on the displayed page corresponding to the page address A1. After the business system completes the execution to the business A to be tested, the business system is controlled to execute the business B to be tested on the page displayed after the execution to the business A to be tested is completed, such that the test result of the business system executing the business A to be tested and the test result of executing the business B to be tested are acquired, without acquiring the page address repeatedly.

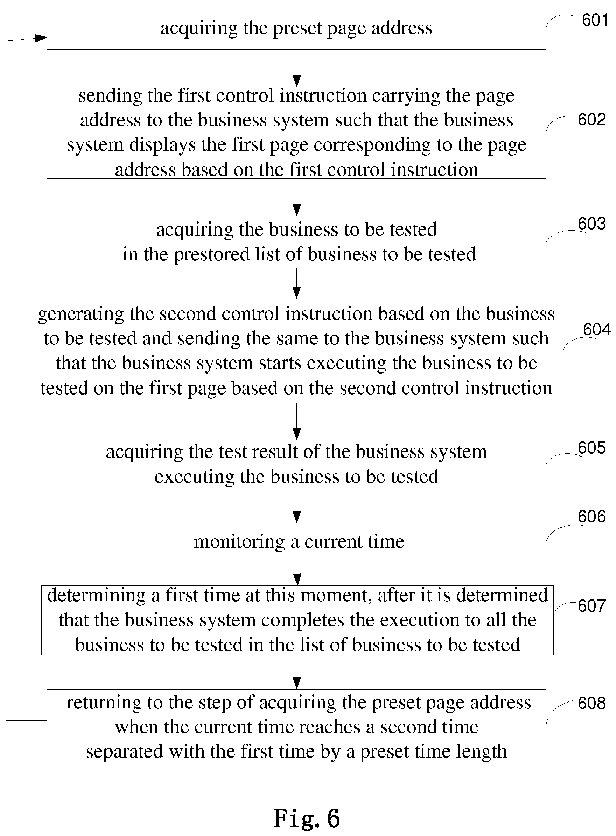

The fifth embodiment of the present disclosure discloses the test method for the business system as shown in Fig. 6, which includes the following processes:
step 601: acquiring the preset page address;
step 602: sending the first control instruction carrying the page address to the business system such that the business system displays the first page corresponding to the page address based on the first control instruction;
step 603: acquiring the business to be tested in the prestored list of business to be tested;
step 604: generating the second control instruction based on the business to be tested and sending the same to the business system such that the business system starts executing the business to be tested on the first page based on the second control instruction;
step 605: acquiring the test result of the business system executing the business to be tested;
step 606: monitoring a current time;
step 607: determining a first time at this moment, after it is determined that the business system completes the execution to all the business to be tested in the list of business to be tested; and
step 608: returning to the step of acquiring the preset page address when the current time reaches a second time separated with the first time by a preset time length.

After the business system completes the execution to all the businesses to be tested in the list of business to be tested, this round of test is determined to be finished. In order to ensure the periodicity of test, it is possible to make a test at intervals of the preset time length. Then, when the current time reaches the second time separated with the first time by the preset time length, the process returns to the step of acquiring the preset page address such that the test restarts.

The preset time length may be set according to practical situations, and is not limited by the present disclosure. For example, the test is taken based on the business system every 30 minutes.

In the practical application, the test method based on the business system of the present disclosure may be achieved by combining a plurality of technologies. For example, as a specific implementation, when the test starts, calling QTP (QuickTest Professional) software automatically at backstage may be achieved by Java servlet technology. The QTP software acquires the business to be tested from the list of business to be tested. Specifically, the user may record a QTP script in advance based on the business to be tested such that the QTP acquires the business to be tested from the recorded script, and controls the business system to execute the business to be tested while AJAX (Asynchronous javascript and xml) acquires the test result of the business system executing the business to be tested. Of course, the test result may be saved to the log file. Further, the AJAX may also control the above test method to periodically repeat, thereby avoiding manually triggering the above method.

It needs to explain that for the existing test method, in order to ensure the comprehensiveness and timeliness of test, it needs to set the test frequency as high as possible and test port as comprehensive as possible, which may occupy excessive resources of the system. In the present disclosure, the test of relevant business may be realized for the business system as long as the business to be tested is stored in the list of business to be tested in advance, thereby occupying less resource as compared with the existing test method.

The sixth embodiment of the present disclosure discloses the test device for the business system, applied to the test system which may communicate with the business system on the network.

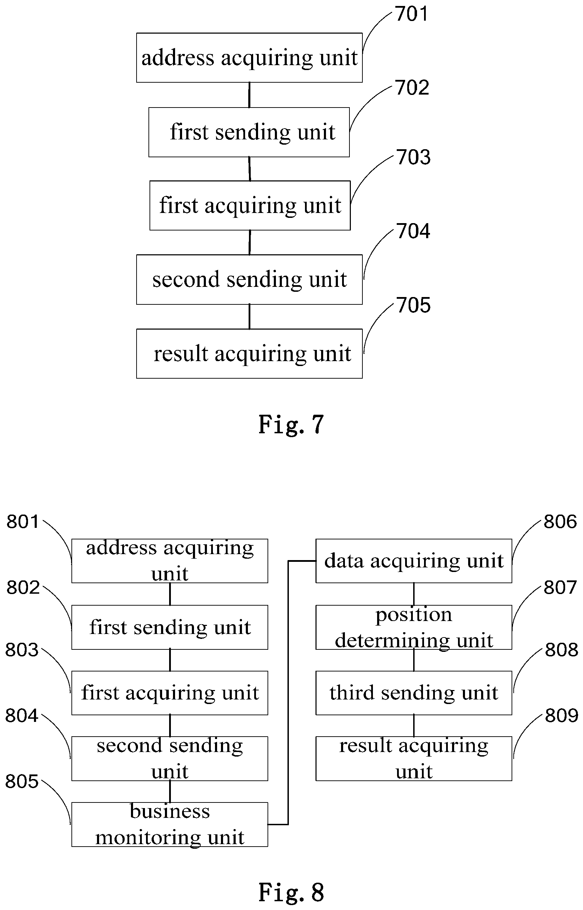

As shown in Fig. 7, the test device includes: an address acquiring unit 701, a first sending unit 702, a first acquiring unit 703, a second sending unit 704 and a result acquiring unit 705.

The address acquiring unit 701 acquires the preset page address.

The first sending unit 702 sends the first control instruction carrying the page address to the business system such that the business system displays the first page corresponding to the page address based on the first control instruction.

The first acquiring unit 703 acquires the business to be tested in the prestored list of business to be tested.

The second sending unit 704 generates the second control instruction based on the business to be tested and sends the same to the business system such that the business system starts executing the business to be tested on the first page based on the second control instruction.

The result acquiring unit 705 acquires the test result of the business system executing the business to be tested.

In the present disclosure, the result acquiring unit 705 may specifically receives the execution result returned by the business system executing the business to be tested; and/or the result acquiring unit 705 may specifically monitor the page where the business system is executing the business to be tested so as to generate the test result.

As such, in the present embodiment, the purpose of testing the business system at the level of business logic is achieved by simulating the process of the user really using the business system to process the business to be tested and acquiring the test result.

The seventh embodiment of the present disclosure discloses the test device based on the business system. As shown in Fig. 8, the test device includes: an address acquiring unit 801, a first sending unit 802, a first acquiring unit 803, a second sending unit 804, a business monitoring unit 805, a data acquiring unit 806, a position determining unit 807, a third sending unit 808 and a result acquiring unit 809.

The address acquiring unit 801 acquires the preset page address.

The first sending unit 802 sends the first control instruction carrying the page address to the business system such that the business system displays the first page corresponding to the page address based on the first control instruction.

The first acquiring unit 803 acquires the business to be tested in the prestored list of business to be tested.

The second sending unit 804 generates the second control instruction based on the business to be tested and sends the same to the business system such that the business system starts executing the business to be tested on the first page based on the second control instruction.

The business monitoring unit 805 monitors the process of the business system executing the business to be tested after the second sending unit generates the second control instruction based on the business to be tested and sends the same to the business system.

The data acquiring unit 806 acquires the test data corresponding to the business to be tested from the prestored profile when it is determined that the business system currently needs to use the test data.

The position determining unit 807 determines the indication position corresponding to the test data.

The third sending unit 808 sends the third control instruction carrying the test data and the indication position to the business system such that the business system fills the test data at the indication position and makes a response.

The result acquiring unit 809 acquires the test result of the business system executing the business to be tested.

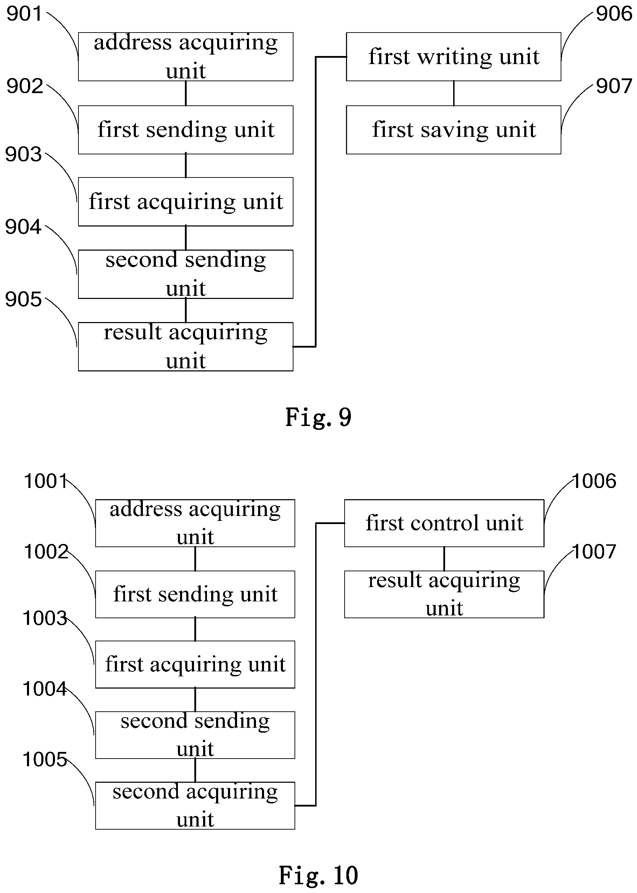

The eighth embodiment of the present disclosure discloses the test device for the business system. As shown in Fig. 9, the test device includes: an address acquiring unit 901, a first sending unit 902, a first acquiring unit 903, a second sending unit 904, a result acquiring unit 905, a first writing unit 906 and a first saving unit 907.

The address acquiring unit acquires the preset page address.

The first sending unit 902 sends the first control instruction carrying the page address to the business system such that the business system displays the first page corresponding to the page address based on the first control instruction.

The first acquiring unit 903 acquires the business to be tested in the prestored list of business to be tested.

The second sending unit 904 generates the second control instruction based on the business to be tested and sends the same to the business system such that the business system starts executing the business to be tested on the first page based on the second control instruction.

The result acquiring unit 905 acquires the test result of the business system executing the business to be tested.

The first filling unit 906 writes the test result into the log file.

The first saving unit 907 saves the log file to the preset storage position.

The ninth embodiment of the present disclosure discloses the test device for the business system. As shown in Fig. 10, the test device includes: an address acquiring unit 1001, a first sending unit 1002, a first acquiring unit 1003, a second sending unit 1004, a second acquiring unit 1005, a first control unit 1006 and a result acquiring unit 1007.

The address acquiring unit 1001 acquires the preset page address.

The first sending unit 1002 sends the first control instruction carrying the page address to the business system such that the business system displays the first page corresponding to the page address based on the first control instruction.

The first acquiring unit 1003 acquires the business to be tested in the prestored list of business to be tested.

The second sending unit 1004 generates the second control instruction based on the business to be tested and sends the same to the business system such that the business system starts executing the business to be tested on the first page based on the second control instruction.

The second acquiring unit 1005 acquires another business to be tested adjacent to the business to be tested executed by the business system in the list of business to be tested.

The first control unit 1006 controls the business system to continuously execute the unexecuted another business to be tested on the page displayed after the execution to the business to be tested based on the second control instruction is completed, until the business system executes all the business to be tested in the list of business to be tested.

The result acquiring unit 1007 acquires the test result of the business system executing the business to be tested.

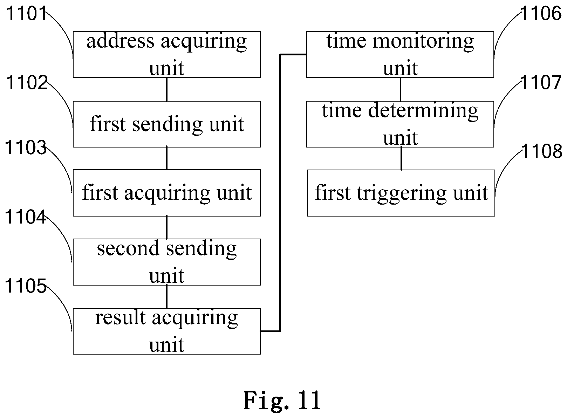

The tenth embodiment of the present disclosure discloses the test device for the business system. As shown in Fig. 11, the test device includes: an address acquiring unit 1101, a first sending unit 1102, a first acquiring unit 1103, a second sending unit 1104, a result acquiring unit 1105, a time monitoring unit 1106, a time determining unit 1107 and a first triggering unit 1108.

The address acquiring unit 1101 acquires the preset page address.

The first sending unit 1102 sends the first control instruction carrying the page address to the business system such that the business system displays the first page corresponding to the page address based on the first control instruction.

The first acquiring unit 1103 acquires the business to be tested in the prestored list of business to be tested.

The second sending unit 1104 generates the second control instruction based on the business to be tested and sends the same to the business system such that the business system starts executing the business to be tested on the first page based on the second control instruction.

The result acquiring unit 1105 acquires the test result of the business system executing the business to be tested.

The time monitoring unit 1106 monitors the current time.

The time determining unit 1107 determines the first time at this moment, after it is determined that the business system completes the execution to all the business to be tested in the list of business to be tested.

The first triggering unit 1108 triggers the address acquiring unit to acquire the preset page address when the current time reaches the second time separated with the first time by the preset time length.

As understood by persons skilled in the art, the test device based on the business system of each embodiment of the present disclosure may be implemented by the computer including a processor configured to execute the steps of the test method of each embodiment in the present disclosure. Alternatively, the test device based on the business system may be implemented by a computer including a memory and a processor configured to carry out the steps of the test method of each embodiment by executing the programs stored on the memory.

Each embodiment of the present specification is described in a progressive manner, what focuses in each embodiment is different from other embodiments, and the same or similar parts between each embodiment may refer to each other. As for the device disclosed in the embodiments, since it corresponds to the method disclosed in the embodiments, its description is relatively simple, and the relevant contents may refer to the explanation of the method.

The above explanation of the disclosed embodiments makes the person skilled in the art realize or use the present invention. Various modifications to the embodiments are obvious to the person skilled in the art. The general principles defined herein may be implemented in other embodiments without departing from the spirit or range of the present disclosure. Therefore, the present disclosure is not limited to the embodiments shown herein, but to cover the widest range in line with the principles and novelty characteristics disclosed herein.

## Claims

1. A test method for a business system, comprising:
acquiring a preset page address;
sending a first control instruction carrying the page address to the business system, such that the business system displays a first page corresponding to the page address based on the first control instruction;
acquiring a business to be tested in a prestored list of business to be tested;
generating a second control instruction based on the business to be tested and sending it to the business system, such that the business system starts executing the business to be tested on the first page based on the second control instruction; and
acquiring a test result of the business system executing the business to be tested.

2. The test method according to claim 1, wherein after generating the second control instruction based on the business to be tested and sending it to the business system, the method further comprises:
monitoring a process of the business system executing the business to be tested;
acquiring a test data corresponding to the business to be tested from a prestored profile when it is determined that the business system currently needs to use the test data;
determining an indication position corresponding to the test data; and
sending a third control instruction carrying the test data and the indication position to the business system, such that the business system fills the test data at the indication position and makes a response.

3. The test method according to claim 1, wherein after acquiring the test result of the business system executing the business to be tested, the method further comprises:
writing the test result into a log file; and
saving the log file to a preset storage position.

4. The test method according to claim 1, wherein where the list of business to be tested includes at least two businesses to be tested, after generating the second control instruction based on the business to be tested and sending it to the business system such that the business system starts executing the business to be tested on the first page based on the second control instruction, the method further comprises:
acquiring another business to be tested adjacent to the business to be tested executed by the business system in the list of business to be tested; and
controlling the business system to continuously execute the unexecuted another business to be tested on the page displayed after the execution to the business to be tested based on the second control instruction is completed, until the business system completes the execution to all the businesses to be tested in the list of business to be tested.

5. The test method according to any one of claims 1-4, further comprising:
monitoring a current time;
determining a first time at this moment, after it is determined that the business system completes the execution to all the businesses to be tested in the list of business to be tested; and
returning to the step of acquiring the preset page address when the current time reaches a second time separated with the first time by a preset time length.

6. The test method according to claim 1, wherein the acquiring the test result of the business system executing the business to be tested comprises:
receiving an execution result returned by the business system executing the business to be tested; and/or
monitoring a page where the business system is executing the business to be tested, and generating the test result.

7. A test device for a business system, comprising:
an address acquiring unit for acquiring a preset page address;
a first sending unit for sending a first control instruction carrying the page address to the business system such that the business system displays a first page corresponding to the page address based on the first control instruction;
a first acquiring unit for acquiring a business to be tested in a prestored list of business to be tested;
a second sending unit for generating a second control instruction based on the business to be tested and sending it to the business system, such that the business system starts executing the business to be tested on the first page based on the second control instruction; and
a result acquiring unit for acquiring a test result of the business system executing the business to be tested.

8. The test device according to claim 7, further comprising:
a business monitoring unit for monitoring a process of the business system executing the business to be tested after the second sending unit generates the second control instruction based on the business to be tested and sends it to the business system;
a data acquiring unit for acquiring a test data corresponding to the business to be tested from a prestored profile when it is determined that the business system currently needs to use the test data;
a position determining unit for determining an indication position corresponding to the test data; and
a third sending unit for sending a third control instruction carrying the test data and the indication position to the business system, such that the business system fills the test data at the indication position and makes a response.

9. The test device according to claim 7, further comprising:
a first writing unit for writing the test result into a log file; and
a first saving unit for saving the log file to a preset storage position.

10. The test device according to claim 7, further comprising:
a second acquiring unit for acquiring another business to be tested adjacent to the business to be tested executed by the business system in the list of business to be tested; and
a first control unit for controlling the business system to continuously execute the unexecuted another business to be tested on the page after the execution to the business to be tested based on the second control instruction is completed, until the business system completes the execution to all the businesses to be tested in the list of business to be tested.

11. The test device according to any one of claims 7-10, further comprising:
a time monitoring unit for monitoring a current time;
a time determining unit for determining a first time at this moment, after it is determined that the business system completes the execution to all the businesses to be tested in the list of business to be tested; and
a first triggering unit for triggering the address acquiring unit to acquire the preset page address when the current time reaches a second time separated with the first time by a preset time length.

12. The test device according to claim 7, wherein the result acquiring unit is specifically used to receive an execution result returned by the business system executing the business to be tested; and/or specifically monitor the page where the business system is executing the business to be tested, and generate the test result.
